(19) Europäisches Patentamt
European Patent Office
Office européen des brevets

(11) **EP 2 138 370 A2**

(12) **EUROPÄISCHE PATENTANMELDUNG**

(43) Veröffentlichungstag:
**30.12.2009 Patentblatt 2009/53**

(51) Int Cl.:
***B60W 20/00*** *(2006.01)* *B60W 10/08* *(2006.01)*
***B60W 10/10*** *(2006.01)* *B60W 10/26* *(2006.01)*

(21) Anmeldenummer: **09100255.0**

(22) Anmeldetag: **29.04.2009**

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK TR**

(30) Priorität: **26.06.2008 DE 102008002690**

(71) Anmelder: **ROBERT BOSCH GMBH
70442 Stuttgart (DE)**

(72) Erfinder: **Ries-Mueller, Klaus
74906 Bad Rappenau (DE)**

(54) **Steuerungsverfahren und Steuerungsvorrichtung**

(57) Die vorliegende Erfindung betrifft ein Steuerungsverfahren für ein Kraftfahrzeug, wobei eine Einrichtung des Kraftfahrzeugs erwartungsabhängig gesteuert wird. Um ein Steuerungsverfahren zu schaffen, das geeignet sind, den Treibstoffverbrauch des Kraftfahrzeugs zu minimieren oder das Fahrverhalten des Kraftfahrzeugs zu optimieren, und besonders einfach zu handhaben ist, umfasst das Steuerungsverfahren die folgenden Schritte: Auswählen eines gespeicherten Datensatzes eines Parameters für eine Route unter Verwendung eines Auswahlkriteriums (S3); Steuern der Einrichtung des Kraftfahrzeugs unter Verwendung des gespeicherten Datensatzes während einer Fahrt des Kraftfahrzeugs (S5); Empfangen einer Sequenz des Parameters während der Fahrt des Kraftfahrzeugs (S1); und Vergleichen des gespeicherten Datensatzes und der Sequenz, um zu bestimmen, ob das Kraftfahrzeug der Route folgt (S4).

Fig. 2

EP 2 138 370 A2

**Beschreibung**

Stand der Technik

Die vorliegende Erfindung betrifft ein Steuerungsverfahren gemäß dem Oberbegriff des Patentanspruchs 1 und eine Steuerungsvorrichtung gemäß dem Oberbegriff des Patentanspruchs 9.

Eine solches Steuerungsverfahren und eine solche Steuerungsvorrichtung sind aus der DE 102 26 143 bekannt, wobei eine Einrichtung des Kraftfahrzeugs erwartungsabhängig gesteuert wird. Bei dem Kraftfahrzeug handelt es sich um ein Kraftfahrzeug mit Hybridantrieb. Die gesteuerte Einrichtung ist eine Antriebskomponente des Hybridantriebs wie der Verbrennungsmotor, der Elektromotor oder die Batterie. Die Steuerungsvorrichtung umfasst einen Speicher mit gespeicherten Daten zu bestimmten Routen. Die gespeicherten Daten wurden erstellt, als der Kraftfahrzeugführer zuvor entlang der bestimmten Routen fuhr und betreffen irgendwelche äußeren Einflüsse und Zustandsgrößen des Kraftfahrzeugs. Vor dem Beginn einer Fahrt wählt der Kraftfahrzeugführer diejenige der gespeicherten Routen aus, welcher er folgen möchte. Auf Basis von geographischen Daten von einem Navigationssystem, weiteren Daten von Erfassungseinrichtungen, die irgendwelche äußeren Einflüsse und Zustandsgrößen des Kraftfahrzeugs erfassen, und den gespeicherten Daten zu der ausgewählten Route berechnet die Steuerungsvorrichtung Steuerungsbefehle für den erwarteten weiteren Routenverlauf, der sich aus der Position des Kraftfahrzeugs und der ausgewählten Route ergibt, um den Treibstoffverbrauch des Kraftfahrzeugs zu minimieren.

Ein Nachteil liegt jedoch darin, dass ein solches Steuerungsverfahren und eine solche Steuerungsvorrichtung nur in Zusammenhang mit einem Navigationssystem verwendbar sind, wobei die Route im Voraus eingegeben werden muss. Dies verursacht Kosten und ist zudem umständlich.

Offenbarung der Erfindung

Der vorliegenden Erfindung liegt die Aufgabe zugrunde, ein Steuerungsverfahren und eine Steuerungsvorrichtung zu schaffen, die geeignet sind, den Treibstoffverbrauch des Kraftfahrzeugs zu minimieren oder das Fahrverhalten des Kraftfahrzeugs zu optimieren, und besonders einfach zu handhaben sind.

Die der Erfindung zugrunde liegende Aufgabe wird durch ein Steuerungsverfahren mit den Merkmalen des kennzeichnenden Teils des Patentanspruchs 1 und eine Steuerungsvorrichtung mit den Merkmalen des kennzeichnenden Teils des Patentanspruchs 9 gelöst.

Die vorliegende Erfindung betrifft ein Steuerungsverfahren für ein Kraftfahrzeug mit den folgenden Schritte: Auswählen eines gespeicherten Datensatzes eines Parameters für eine Route unter Verwendung eines Auswahlkriteriums; Steuern der Einrichtung des Kraftfahrzeugs unter Verwendung des gespeicherten Datensatzes während einer Fahrt des Kraftfahrzeugs; Empfangen einer Sequenz des Parameters während der Fahrt des Kraftfahrzeugs; und Vergleichen des gespeicherten Datensatzes und der empfangenen Sequenz, um zu bestimmen, ob das Kraftfahrzeug der Route folgt. Das Steuerungsverfahren erfordert kein Navigationssystem und ist einfach zu handhaben, da die Route nicht im Voraus eingegeben werden muss. Dies stellt sicher, dass das Steuerungsverfahren grundsätzlich angewendet wird. Das Steuerungsverfahren lässt sich außerdem durch ein Softwareprogramm umsetzen, welches auf einer vorhandenen Steuerungsvorrichtung installiert wird, und ist somit quasi kostenlos. Bei dem Parameter handelt es sich insbesondere um Zustandsgrößen des Kraftfahrzeugs wie den Lenkwinkel, der Geschwindigkeit, der Höhenlage, der Betätigung der Bremsen des Kraftfahrzeugs, der Beschleunigung oder Verzögerung. Bei dieser Einrichtung kann es sich um den Hybridantrieb (An- und Abschalten des Elektromotors oder Verbrennungsmotors, Veränderung des Motorbetriebsmodus wie Schicht- und Homogenverbrennung), das Batterieladegerät, das Getriebe (Veränderung der Motorlast, der Drehzahl oder der Schaltstufe für Automatikgetriebe) oder die Bremseinrichtung (Voraktivierung der Bremseinrichtung oder Bremseingriff) des Kraftfahrzeugs handeln.

In einer bevorzugten Ausführungsform ist der Datensatz eine gespeicherte Sequenz des Parameters. Die gespeicherte Sequenz des Parameters basiert auf einer Sequenz des Parameters, die während einer vorherigen Fahrt des Kraftfahrzeugs entlang einer Route erfasst wurde. Die gespeicherte Sequenz kann mit der vorherigen erfassten Sequenz identisch sein. Die erfasste Sequenz kann zur Erzeugung der gespeicherten Sequenz aber auch weiterverarbeitet worden sein. Zur Erzeugung der gespeicherten Sequenz können auch mehrere Sequenzen verwendet werden, die erfasst wurden, während das Kraftfahrzeug während vorherigen Fahrten der Route folgte.

In einer Weiterbildung der bevorzugten Ausführungsform wird der Parameter zum Vergleichen als Funktion der Fahrtstrecke dargestellt. Eine solche Darstellung ist insbesondere gegenüber einer Darstellung als Funktion der Zeit reproduzierbarer und für die Analyse besonders geeignet, weil die Fahrtstrecke für eine Route fest vorgegeben ist, während der Zeitablauf stark variieren kann.

In noch einer Weiterbildung der bevorzugten Ausführungsform wird die empfangene Sequenz des Parameters zum Vergleichen in Intervalle zerlegt. Dies ermöglicht es, geringfügige Abweichungen zwischen der erfassten Sequenz und der gespeicherten Sequenz, die sich im Laufe der Fahrt akkumulieren, auszugleichen.

In noch einer Weiterbildung der bevorzugten Ausführungsform wird eine Sequenz eines weiteren Parameters während der Fahrt des Kraftfahrzeugs entlang der Route empfangen, und wird die Sequenz des weiteren Parameters mit einer weiteren gespeicherten Sequenz verglichen, um zu bestimmen, ob das Kraftfahrzeug der Route folgt. Diese Bestimmung wird wiederum verwendet, um festzustellen, ob das Kraftfahrzeug der ausgewählten Route folgt.

In noch einer bevorzugten Ausführungsform umfasst der Datensatz gespeicherte Kenngrößen eines Parameters, werden aus der empfangenen Sequenz des Parameters empfangene Kenngrößen des Parameters ermittelt, und werden die empfangenen Kenngrößen des Parameters mit den gespeicherten Kenngrößen des Parameters verglichen, um zu bestimmen, ob das Kraftfahrzeug der Route folgt. Die gespeicherten Kenngrößen basieren auf einer oder mehreren Sequenzen des Parameters, die während einer vorherigen Fahrt des Kraftfahrzeugs entlang einer Route erfasst wurden. Bei dem Parameter handelt es sich wiederum insbesondere um Zustandsgrößen des Kraftfahrzeugs wie den Lenkwinkel, der Geschwindigkeit, der Höhenlage, der Betätigung der Bremsen des Kraftfahrzeugs, der Beschleunigung oder Verzögerung. Eine Kenngröße des Parameters ist beispielsweise ein Minimalwert, ein Maximalwert, ein Durchschnittswert für ein bestimmtes Streckenintervall oder ein Wert für eine gewisse zurückgelegte Fahrtstrecke.

In einer bevorzugten Ausführungsform umfasst das Auswahlkriterium eine gegenwärtige Uhrzeit. In einer bevorzugten Weiterbildung kann auch das Datum berücksichtigt werden. Dieser fährt zum Beispiel werktags regelmäßig von seinem Wohnort morgens zur Arbeit. Für gewisse Tage und Uhrzeiten wählt das Steuerungsverfahren daher eine bestimmte Sequenz aus. Das Steuerungsverfahren lässt sich daher vom Start ab verwenden. Stellt sich während der Fahrt heraus, dass die falsche Sequenz ausgesucht wurde, wird die Steuerung unter Verwendung dieser ausgewählten Sequenz beendet, und es wird eventuell eine andere Sequenz ausgewählt.

In noch einer bevorzugten Ausführungsform umfasst das Auswahlkriterium das Vergleichen des gespeicherten Datensatzes und der empfangenen Sequenz. Das Steuerungsverfahren lässt sich nicht vom Start ab verwenden. Es ist jedoch mit großer Wahrscheinlichkeit sichergestellt, dass kein falscher Datensatz für die Steuerung verwendet wird.

Die vorliegende Erfindung betrifft ferner eine Steuerungsvorrichtung für ein Kraftfahrzeug mit den folgenden Einrichtungen: einer Einrichtung zum Auswählen eines gespeicherten Datensatzes eines Parameters für eine Route unter Verwendung eines Auswahlkriteriums; einer Einrichtung zum Steuern der Einrichtung des Kraftfahrzeugs unter Verwendung des gespeicherten Datensatzes während einer Fahrt des Kraftfahrzeugs; einer Einrichtung zum Empfangen einer Sequenz des Parameters während der Fahrt des Kraftfahrzeugs; und einer Einrichtung zum Vergleichen des gespeicherten Datensatzes und der Sequenz, um zu bestimmen, ob das Kraftfahrzeug der Route folgt.

Kurze Beschreibung der Zeichnungen

Im Folgenden wird die Erfindung mit Bezugnahme auf die Zeichnungen näher beschrieben. Es zeigen:

FIG. 1 eine schematische Ansicht eines Steuerungssystems;
FIG. 2 ein Flussdiagramm einer ersten Ausführungsform eines Steuerungsverfahrens; und
FIG. 3 ein Flussdiagramm einer zweiten Ausführungsform eines Steuerungsverfahrens.

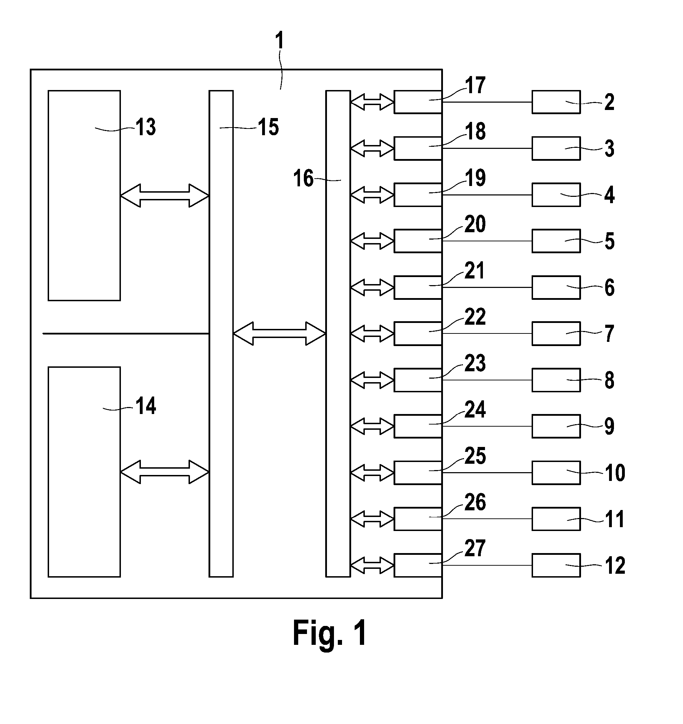

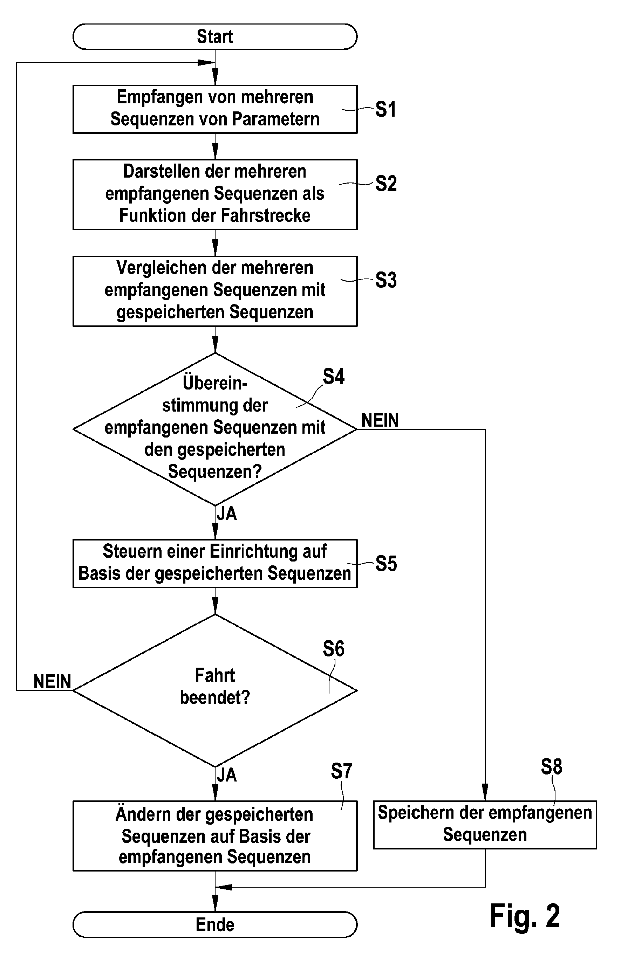

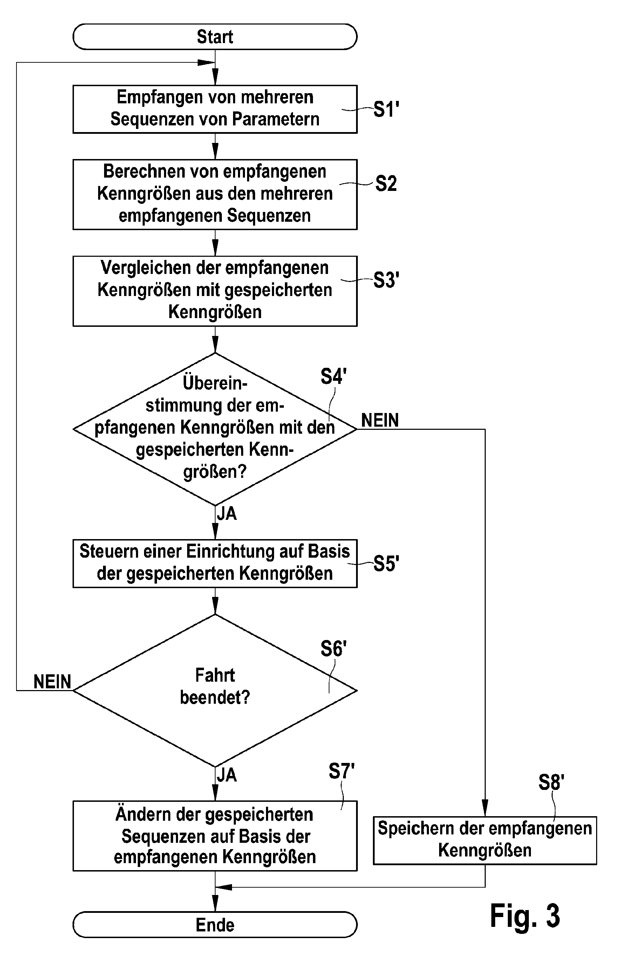

FIG. 1 zeigt eine schematische Ansicht eines Steuerungssystems, welches in einem Kraftfahrzeug mit Hybridantrieb eingebaut ist, mit einer Steuerungsvorrichtung 1, einer Lenkwinkelerfassungseinrichtung 2, einer Fahrzeuggeschwindigkeitsberechnungseinrichtung 3, einer Fahrtstreckenberechnungseinrichtung 4, einer Höhenberechnungseinrichtung 5, einer Bremsenbetätigungserfassungseinrichtung 6, einer Beschleunigungserfassungseinrichtung 7, einer Antriebssteuerung 8, einer Batterieladegerätsteuerung 9, einer Getriebesteuerung 10, einer Eingabeeinrichtung 11 und einer Speichereinrichtung 12. Die Steuerungsvorrichtung 1 ist als eine Von-Neumann-Maschine ausgebildet und umfasst einen zentralen Prozessor 13, einen Arbeitsspeicher 14, einen Eingabe/Ausgabe-Prozessor 16 und Verbindungswege (Bus) 15. Der zentrale Prozessor 13 arbeitet ein Maschinenprogramm ab, das im dem Arbeitsspeicher 14 gespeichert ist und ein Steuerungsverfahren umfasst, das mit Bezug auf FIG. 2 oder FIG. 3 beschrieben wird. Der Eingabe/Ausgabe-Prozessor 16 greift über eine Schnittstelle für die Lenkwinkelerfassungseinrichtung 17, eine Schnittstelle für die Fahrzeuggeschwindigkeit 18, eine Schnittstelle für die Fahrtstreckenberechnungseinrichtung 19, eine Schnittstelle für die Höhenberechnungseinrichtung 20, eine Schnittstelle für die Bremsenbetätigungserfassungseinrichtung 21, eine Schnittstelle für die Beschleunigungserfassungseinrichtung 22, eine Schnittstelle für die Antriebssteuerung 23, eine Schnittstelle für die Batterieladegerätsteuerung 24, eine Schnittstelle für die Getriebesteuerung 25, eine Schnittstelle für die Eingabeeinrichtung 26 und eine Schnittstelle für die Speichereinrichtung 27 auf die Lenkwinkelerfassungseinrichtung 2, die Fahrzeuggeschwindigkeitsberechnungseinrichtung 3, die Fahrtstreckenberechnungseinrichtung 4, die Höhenberechnungseinrichtung 5, die Bremsenbetätigungserfassungseinrichtung 6, die Beschleunigungserfassungseinrichtung 7, die Antriebssteuerung 8, die Batterieladegerätsteuerung 9, die Getriebesteuerung 10, die Eingabeeinrichtung 11 bzw. die Speichereinrichtung 12 zu. Die Lenkwinkelerfassungseinrichtung 2 ist an der Lenksäule des Kraftfahrzeugs angebracht und erfasst den Lenkwinkel oder berechnet ihn alternativ auf den Drehzahlen der einzelnen Räder des Kraftfahrzeugs. Die Fahrzeuggeschwindigkeitsberechnungseinrichtung 3 berechnet die Geschwindigkeit des Kraftfahrzeugs aus den Drehzahlen der Räder des Kraftfahrzeugs. Die Fahrtstreckenberechnungseinrichtung 4 berechnet die von dem Kraftfahrzeug zurückgelegte Fahrtstrecke aus den Drehzahlen der Räder des Kraftfahrzeugs. Die Höhenberechnungseinrichtung 5 berechnet die Höhenlage des Kraftfahrzeugs aus einem Signal eines Drucksensors. Die Bremsenbetätigungserfassungseinrichtung 6 erfasst die Betätigung der Bremsen des Kraftfahrzeugs. Die Beschleunigungserfassungseinrichtung 7 erfasst die Beschleunigung und Verzögerung des Kraftfahrzeugs in allen drei Raumrichtungen. Die Antriebssteuerung 8 steuert den Hybridantrieb des Kraftfahrzeugs. Die Batterieladegerätsteuerung 9 steuert das Ladegerät für die Batterie des Elektromotors, der Bestandteil des Hybridantriebs ist. Die Getriebesteuerung 10 steuert das Getriebe des Kraftfahrzeugs. Über die Eingabeeinrichtung 11 kann der Kraftfahrzeugführer Optionen für die Steuerungsvorrichtung eingeben und so beispielsweise optional einen Datensatz für die Routensteuerung auswählen. In der Speichereinrichtung 12 werden Daten gespeichert, die für die Steuerungsvorrichtung 1 benötigt werden. Die Steuerungsvorrichtung kann zusätzlich mit einem Navigationssystem verbunden sein, um dessen geographische Daten und Ortungsfunktion zu nutzen. Falls die Uhrzeit als Entscheidungskriterium verwendet wird, ist als weitere Einrichtung eine Zeitangabeeinrichtung vorgesehen, welche das Datum und die Uhrzeit angibt und auf welche der Eingabe/ Ausgabe-Prozessor 16 über eine weitere Schnittstelle zugreift.

FIG. 2 zeigt ein Flussdiagramm einer ersten Ausführungsform eines Steuerungsverfahrens. Nach dem Starten des Hybridantriebs tastet die Steuerungsvorrichtung 1 im Schritt S1 Parameter wie ein Lenkwinkelsignal von der Lenkwinkelerfassungseinrichtung 2, eine Fahrzeuggeschwindigkeitssignal von der Fahrzeuggeschwindigkeitsberechnungseinrichtung 3, ein Fahrtstreckensignal von der Fahrtstreckenberechnungseinrichtung 4, ein Höhensignal von der Höhenberechnungseinrichtung 5, ein Bremsbetätigungssignal von der Bremsenbetätigungserfassungseinrichtung 6 und ein Beschleunigungssignal von der Beschleunigungserfassungseinrichtung 7 simultan in festen Zeitintervallen von 100 Millisekunden ab.

Im Schritt S2 stellt die Navigationsvorrichtung die Parameter als empfangene Sequenzen abhängig von der Fahrtstrecke dar. Durch lineare Interpolation zwischen den gemessenen Parameterwerten werden dabei für jeden Parameter in festen Intervallen entlang der Fahrtstrecke Parameterwerte berechnet.

Im Schritt S3 vergleicht die Steuerungsvorrichtung 1 jede der empfangenen Sequenzen der Parameter als Funktion der zurückgelegten Fahrtstrecke jeweils mit zusammengehörigen gespeicherten Sequenzen desselben Parameters. Dabei werden die empfangenden Sequenzen in Teilsequenzen zerlegt, die jeweils zu einem bestimmten Streckenintervall gehören. Dies ermöglicht es kleine Fahrtstreckenabweichungen auszugleichen. Für jede empfangene Teilsequenz wird nun ein Bereich einer jeden der gespeicherten Sequenzen desselben Parameters gesucht, der mit der empfangenen Teilsequenz übereinstimmt. Wenn $x_i$ die Parameterwerte der empfangenen Teilsequenz darstellen, $y_{i+j}$ dieselben Parameterwerte der gespeicherten Sequenz darstellen und N die Anzahl der Parameterwerte der empfangenen Teilsequenz ist, wird dazu das j gesucht, für welches die mittlere Abweichung $\Delta_{TEIL}$ einen Minimalwert hat, wobei gilt:

$$\Delta_{TEIL} = \frac{1}{N} \cdot \sum_{i=1}^{N} \sqrt{\left(x_i - y_{i+j}\right)^2}$$

Alternativ kann auch das j gesucht werden, für welche eine Produktsumme $P_{TEIL}$ maximal ist, wobei gilt:

$$P_{TEIL} = \sum_{i=1}^{N} x_i \cdot y_{i+j}$$

Als Randbedingung wird die Reihenfolge der Teilsequenzen bei der Suche berücksichtigt. Die Teilsequenzen $x_i$ werden dann jeweils um die j Streckenintervalle verschoben und dann zu einer Gesamtsequenz $X_i$ zusammengesetzt. Beim Zusammensetzen kann es vorkommen, dass für bestimmte i, d.h. für bestimmte Position der zurückgelegten Fahrtstrecke kein Parameterwert $X_i$ vorhanden ist, während für andere bestimmte Positionen der zurückgelegten Fahrtstrecke zwei Parameterwerte vorhanden sind. Im ersteren Fall wird der Parameterwert durch Interpolation ergänzt. Im letzteren Fall wird einer der Parameterwerte ausgewählt oder ein Mittelwert gebildet. Hieraufhin werden die mittleren Abweichungen $\Delta_{GESAMT}$ der Gesamtsequenz $X_i$ von der entsprechenden gespeicherten Sequenz berechnet, wobei, wenn N die Anzahl der Parameterwerte der Gesamtsequenz ist, gilt:

$$\Delta_{GESAMT} = \frac{1}{N} \cdot \sum_{i=1}^{N} \sqrt{\left(X_i - y_i\right)^2}$$

Hierauf werden die zusammengehörigen Sequenzen $y_i = y_{min}$ für die Parameter ausgewählt, für welche die $\Delta_{GESAMT}$ die kleinsten Werte haben. Alternativ kann wiederum auch eine Produktsumme $P_{GESAMT}$ berechet werden, wobei gilt:

$$P_{GESAMT} = \sum_{i=1}^{N} X_i \cdot y_i$$

Bei der Auswahl können die mittleren Abweichungen $\Delta_{GESAMT}$ bzw. die Produktsummen eine unterschiedliche Bedeutung haben. Der Lenkwinkel ist für eine bestimmte Fahrtstrecke von großer Bedeutung und sollte auch die Auswahl dementsprechend stark beeinflussen. Die Beschleunigung ist hingegen von geringerer Bedeutung, da sie vom Verkehrsaufkommen abhängt, welches sich ändern kann. Die mittleren Abweichungen bzw. die Produktsummen für die einzelnen Parameter werden daher mit einem Gewichtungsfaktor multipliziert, der die unterschiedliche Bedeutung der einzelnen Parameter berücksichtigt, und dann summiert. Es werden die zusammengehörigen Sequenzen ausgewählt, für welche das Summationsergebnis den kleinsten Wert ($\Delta_{GESAMT}$) bzw. den größten Wert ($P_{GESAMT}$) hat.

Im Schritt S4 wird entschieden, ob die gespeicherten Sequenzen $y_{min}$ mit den entsprechenden empfangenen Sequenzen übereinstimmen, d.h. ob sie zu der gleichen Route gehören. Als Kriterium werden wiederum das Summationsergebnis der mittleren Abweichungen $\Delta_{GESAMT}$ bzw. der Produktsummen für die zusammengehörigen Sequenzen herangezogen. Ist die Summe kleiner ($\Delta_{GESAMT}$) bzw. größer ($P_{GESAMT}$) als ein bestimmter Wert, ist das Kriterium erfüllt, d.h. die gespeicherten Sequenzen stimmen mit den empfangenen Sequenzen überein. Erkennt die Steuerungsvorrichtung 1 im Schritt S4 nicht, dass die empfangenen Sequenzen mit den gespeicherten Sequenzen übereinstimmen, speichert sie die empfangenen Sequenzen ab (Schritt S8). Eventuell erstellt die Steuerungsvorrichtung zusätzlich auch eine zugehörige Steuerungssequenz. Die gespeicherten Sequenzen für Routen, die lange nicht mehr gefahren werden, und die zugehörigen Steuerungssequenzen werden gelöscht. Ansonsten fährt die Steuerungsvorrichtung mit dem Schritt S5 fort.

Im Schritt S5 wird nun eine Einrichtung oder werden mehrere Einrichtungen des Kraftfahrzeugs auf Basis der gespeicherten Sequenzen erwartungsabhängig gesteuert, um den Treibstoffverbrauch des Kraftfahrzeugs zu minimieren oder das Fahrverhalten des Kraftfahrzeugs zu optimieren. Die Steuerungseingriffe können als Steuerungssequenzen zusammen mit den zugehörigen Sequenzen gespeichert sein oder auf Basis der gespeicherten ausgewählten Sequenzen erst berechnet werden. Bei dieser Einrichtung kann es sich um den Hybridantrieb (An- und Abschalten des Elektromotors oder Verbrennungsmotors, Veränderung des Motorbetriebsmodus wie Schicht- und Homogenverbrennung), das Batterieladegerät, das Getriebe (Veränderung der Motorlast, der Drehzahl oder der Schaltstufe für Automatikgetriebe) oder die Bremseinrichtung (Voraktivierung der Bremseinrichtung oder Bremseingriff)des Kraftfahrzeugs handeln. Die Steuerungsvorrichtung unterstellt, dass sich die empfangenen Parameterwerte, d.h. die Umweltbedingungen, in naher und ferner Zukunft so ändern werden wie die Parameterwerte der Sequenzen $y_{min}$ in den Bereichen, welche sich an die Bereiche anschließen, für welche die Übereinstimmung der empfangenen Sequenzen und gespeicherten Sequenzen festgestellt wurde, und führt einen geeigneten Steuereingriff aus. Denkbar ist eine Vielzahl von Steuerungseingriffen. Der Steuereingriff kann zum Beispiel darin bestehen, dass ein Batterieladevorgang vor dem Beginn eines abschüssigen Abschnitts der Fahrtstrecke gestartet wird, welcher anhand des gespeicherten Signals von der Höhenberechnungseinrichtung 5 erkennbar ist, um das Fahrzeug abzubremsen und gleichzeitig die Batterie zu laden. Der Steuereingriff kann auch darin bestehen, dass das Übersetzungsverhältnis des Getriebes vor dem Beginn eines Abschnitts der Fahrtstrecke, auf dem die Geschwindigkeit konstant gehalten wird, wie anhand des Signals der Fahrzeuggeschwindigkeitserfassungseinrichtung erkannt wird, erhöht wird. Der Steuereingriff kann auch das Abschalten des Verbrennungsmotors des Kraftfahrzeugs vor einer längeren Standphase bewirken, die auch anhand des Signals der Geschwindigkeitserfassungseinrichtung erkannt wird. Der Steuereingriff kann auch darin bestehen, dass der Verbrennungsmotor von einem verbrauchsoptimierten Betriebspunkt (Homogenbetrieb) zu einem leistungsoptimierten Betriebspunkt (Schichtbetrieb) vor dem Beginn eines Abschnitts der Fahrtstrecke, auf dem die Geschwindigkeit stark erhöht wird, wie ebenfalls anhand des Signals der Fahrzeuggeschwindigkeitserfassungseinrichtung 4 erkannt wird, umgeschaltet wird. Wenn die Steuerungsvorrichtung 1 zusätzlich auf eine Bremsensteuerungseinrichtung zugreifen kann, kann diese zusätzlich verwendet werden, um die Eingriffe eines elektronischen Stabilitätsprogramms zu steuern.

Im Schritt S6 stellt die Steuerungsvorrichtung am Ausschalten des Motors fest, ob die Fahrt beendet wurde. Wenn die Fahrt beendet wurde, geht das Steuerungsverfahren zum Schritt S7 weiter. Die übereinstimmenden gespeicherten Sequenzen werden nun auf Basis der empfangenen Sequenzen geändert. Dabei werden gespeicherte Sequenzen auf Basis der empfangenen Sequenzen und der mit ihnen übereinstimmenden Sequenzen gebildet, indem für gleiche Fahrtstreckenlängen neue Parameterwerte gebildet werden, welche die Summe des gespeicherten Parameterwerts multipliziert mit einem Gewichtungsfaktor und des empfangenen Parameterwerts multipliziert mit einem weiteren Gewichtungsfaktor sind. Zusätzlich können zugehörige gespeicherte Steuerungssequenzen aktualisiert werden. Beim nächsten Start des Motors des Kraftfahrzeugs beginnt das Steuerungsverfahren im Schritt S1 mit einer geänderten Datenbasis. Wenn die Fahrt hingegen nicht beendet ist, geht das Verfahren zum Schritt S1 zurück, um zu überprüfen, ob die weitere Route mit der erwarteten Route übereinstimmt, welche durch die ausgewählten gespeicherten Sequenzen der Parameter charakterisiert ist. Bei der wiederholten Ausführung des Schritts S3 sind die $y_{min}$ allerdings bekannt und müssen nicht nochmals ausgewählt werden.

FIG. 3 zeigt ein Flussdiagramm einer zweiten Ausführungsform eines Steuerungsverfahrens. Die zweite Ausführungsform ist im Wesentlichen analog zu der ersten Ausführungsform. Es muss meist nur "Sequenz durch "Kenngröße" ersetzt werden. Im Folgenden werden daher nur Unterschiede beschrieben. Im Schritt S2' werden für dieselben Parameter wie im S2 empfangene Kenngrößen berechnet. Dabei handelt es sich beispielsweise um einen (lokalen) Minimalwert oder ein (lokalen) Maximalwert eines Parameters und die Werte der weiteren Parameter, die zur selben Zeit empfangen wurden. Diese zusammengehörigen empfangenen Kenngrößen sind jeweils einem empfangenen Wert für die zurückgelegte Fahrtstrecke zugeordnet, d.h. einem Wert der auf Basis von empfangenen Daten berechnet wurde. Im Schritt S3' vergleicht die Steuerungsvorrichtung 1 diese empfangenen Kenngrößen mit zusammengehörigen gespeicherten Kenngrößen, denen ebenfalls ein gespeicherter Wert für die zurückgelegte Fahrtstrecke zugeordnet ist. Aus den Abweichungen der empfangenen Kenngrößen jeweils von den gespeicherten Kenngrößen und dem empfangenen Wert von dem gespeicherten Wert für die zurückgelegte Fahrtstrecken berechnet die Steuerungsvorrichtung eine Kennzahl zum Beispiel durch Division. Die Kennzahlen für die einzelnen Parameter werden analog zu den Kennzahlen im Schritt S3 gewichtet und dann summiert. Im Schritt S4' wird analog zum Schritt S4 entschieden, ob die gespeicherten Kenngrößen mit den empfangenen Kenngrößen übereinstimmen. Ist die Summe der gewichteten Kennzahlen kleiner als ein bestimmter Wert, ist das Kriterium erfüllt. Die Steuerungsvorrichtung erstellt zusätzlich auch eine zugehörige Steuerungssequenz, da die Parameter, auf denen die Steuerungssequenz basiert später eventuell nicht mehr bereitstehen werden. Die in Schritt S1' empfangenen Sequenzen können gelöscht werden. Es folgt entweder Schritt S8' analog zu Schritt S8 oder die Schritte S5', S6' und S7' analog zu den Schritten S5, S6 und S7.

### Patentansprüche

1. Steuerungsverfahren für ein Kraftfahrzeug, wobei eine Einrichtung des Kraftfahrzeugs erwartungsabhängig gesteuert wird, **gekennzeichnet durch** die folgenden Schritte:

   - Auswählen eines gespeicherten Datensatzes eines Parameters für eine Route unter Verwendung eines Auswahlkriteriums (S3, S3');
   - Steuern der Einrichtung des Kraftfahrzeugs unter Verwendung des gespeicherten Datensatzes während einer Fahrt des Kraftfahrzeugs (S5, S5');
   - Empfangen einer Sequenz des Parameters während der Fahrt des Kraftfahrzeugs (S1, S1'); und
   - Vergleichen des gespeicherten Datensatzes und der empfangenen Sequenz, um zu bestimmen, ob das Kraftfahrzeug der Route folgt (S4, S4').

2. Steuerungsverfahren nach Anspruch 1, **dadurch gekennzeichnet, dass** der Datensatz eine gespeicherte Sequenz des Parameters ist.

3. Steuerungsverfahren nach Anspruch 2, **dadurch gekennzeichnet, dass** der Parameter zum Vergleichen als Funktion der Fahrtstrecke dargestellt wird (S2).

4. Steuerungsverfahren nach Anspruch 2 oder Anspruch 3, **dadurch gekennzeichnet, dass** die empfangene Sequenz des Parameters zum Vergleichen in Intervalle zerlegt wird.

5. Steuerungsverfahren nach einem der Ansprüche 2 bis 4, **dadurch gekennzeichnet, dass** eine Sequenz eines weiteren Parameters während der Fahrt des Kraftfahrzeugs entlang der Route empfangen wird (S1), und dass die Sequenz des weiteren Parameters mit einer weiteren gespeicherten Sequenz verglichen wird (S3), um zu bestimmen, ob das Kraftfahrzeug der Route folgt.

6. Steuerungsverfahren nach Anspruch 1, **dadurch gekennzeichnet, dass** der Datensatz gespeicherte Kenngrößen eines Parameters umfasst, dass aus der empfangenen Sequenz des Parameters empfangene Kenngrößen des Parameters ermittelt werden (S2'), und dass die empfangenen Kenngrößen des Parameters mit den gespeicherten Kenngrößen des Parameters verglichen werden (S3'), um zu bestimmen, ob das Kraftfahrzeug der Route folgt.

7. Steuerungsverfahren nach einem der vorhergehenden Ansprüche, **dadurch gekennzeichnet, dass** das Auswahlkriterium eine gegenwärtige Uhrzeit umfasst.

8. Steuerungsverfahren nach einem der vorhergehenden Ansprüche, **dadurch gekennzeichnet, dass** das Auswahlkriterium das Vergleichen des gespeicherten Datensatzes und der empfangenen Sequenz umfasst.

9. Steuerungsvorrichtung (1) für ein Kraftfahrzeug, die eingerichtet ist, eine Einrichtung des Kraftfahrzeugs erwartungsabhängig zu steuern, **gekennzeichnet durch** die folgenden Einrichtungen:

   eine Einrichtung (13) zum Auswählen eines gespeicherten Datensatzes eines Parameters für eine Route unter Verwendung eines Auswahlkriteriums;
   eine Einrichtung (13) zum Steuern der Einrichtung des Kraftfahrzeugs unter Verwendung des gespeicherten Datensatzes während einer Fahrt des Kraftfahrzeugs;
   eine Einrichtung (2, 3, 4, 5, 6, 7) zum Empfangen einer Sequenz des Parameters während der Fahrt des Kraftfahrzeugs; und
eine Einrichtung (13) zum Vergleichen des gespeicherten Datensatzes und der Sequenz, um zu bestimmen, ob das Kraftfahrzeug der Route folgt (S4, S4').

**Fig. 1**

Start

Empfangen von mehreren
Sequenzen von Parametern — S1

Darstellen der mehreren
empfangenen Sequenzen als — S2
Funktion der Fahrstrecke

Vergleichen der mehreren
empfangenen Sequenzen mit — S3
gespeicherten Sequenzen

Übereinstimmung der
empfangenen Sequenzen mit     S4
den gespeicherten
Sequenzen?

NEIN

JA

Steuern einer Einrichtung auf
Basis der gespeicherten Sequenzen — S5

S6

NEIN          Fahrt
beendet?

JA

S7                              S8

Ändern der gespeicherten
Sequenzen auf Basis der          Speichern der empfangenen
empfangenen Sequenzen            Sequenzen

Ende

**Fig. 2**

```
                    ┌─────────────────────┐
                    │        Start        │
                    └─────────────────────┘
                              │
     ┌────────────────────────┤
     │                        ▼
     │        ┌──────────────────────────────┐
     │        │  Empfangen von mehreren      │ ─── S1'
     │        │  Sequenzen von Parametern    │
     │        └──────────────────────────────┘
     │                        │
     │                        ▼
     │        ┌──────────────────────────────┐
     │        │  Berechnen von empfangenen   │ ─── S2
     │        │  Kenngrößen aus den mehreren │
     │        │  empfangenen Sequenzen       │
     │        └──────────────────────────────┘
     │                        │
     │                        ▼
     │        ┌──────────────────────────────┐
     │        │  Vergleichen der empfangenen │ ─── S3'
     │        │  Kenngrößen mit gespeicherten│
     │        │  Kenngrößen                  │
     │        └──────────────────────────────┘
     │                        │
     │                        ▼
     │                   ◇ Überein-  ◇        S4'
     │              stimmung der em-
     │         pfangenen Kenngrößen mit den ───── NEIN ──┐
     │              gespeicherten Kenn-                  │
     │                   größen? ◇                       │
     │                        │ JA                       │
     │                        ▼                          │
     │        ┌──────────────────────────────┐           │
     │        │  Steuern einer Einrichtung   │ ─── S5'   │
     │        │  auf Basis der gespeicherten │           │
     │        │  Kenngrößen                  │           │
     │        └──────────────────────────────┘           │
     │                        │                          │
     │                        ▼                          │
     │                   ◇  Fahrt  ◇          S6'         │
     │   NEIN ──────────    beendet?                     │
     │                   ◇          ◇                     │
     │                        │ JA          S7'          │
     │                        ▼                 S8'      │
     │        ┌──────────────────────┐  ┌───────────────┐│
     │        │ Ändern der gespei-   │  │ Speichern der ││
     │        │ cherten Sequenzen auf│  │ empfangenen   ││
     │        │ Basis der empfangenen│  │ Kenngrößen    ││
     │        │ Kenngrößen           │  └───────────────┘│
     │        └──────────────────────┘          │        │
     │                        │◄────────────────┴────────┘
     │                        ▼
              ┌─────────────────────┐
              │         Ende        │          Fig. 3
              └─────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10226143